# EUROPEAN PATENT APPLICATION

(11) **EP 4 113 420 A1**
(43) Date of publication of application: **04.01.2023**
(21) Application number: 22182618.3
(22) Date of filing: 01.07.2022
(51) Int. Cl.: G06Q 40/06

(54) **TRACKING, IDENTIFICATION AND ENCRYPTION SYSTEM FOR FINANCIAL PLANS AND CORPORATE DOCUMENTS AND RELATED METHOD**

(30) Priority: 02.07.2021 IT 202100017510
(71) Applicant: Jarvit S.r.l., 20020 Lainate (MI) (IT)
(72) Inventor: ALCARO, FRANCESCO, 88050 AMARONI (CZ) (IT)
(74) Representative: Giuliano, Natalia

(57) **Abstract**

Tracking, identification and encryption system for financial plans and corporate documents comprising:
- a computer platform for computers equipped with an artificial intelligence system;
- at least one financial document containing financial data;
- at least one macro block in which the data relating to each expense specified in each at least one financial document is stored and divided into sub-blocks;
- at least one investment quota, processed by the system on the basis of the data stored and processed by the macro block.

Said computer platform is configured to transform a plurality of accounting documents into metadata, such metadata being stored in chains of blocks, where an encrypting algorithm concatenates the next block, protected by encryption.

Said system being configured to export by means of a specific API said at least one financial document uniquely identified, to at least a second computer platform.

## Description

The present invention relates to a tracking, identification and encryption system for financial plans and corporate documents.

The present invention also relates to a tracking, identification and encryption method for financial plans and corporate documents.

In particular, the present invention relates to a system and a method for managing financial plans and business documents within and by means of computer implemented methods. In other words, the system and the method according to the invention concern the tokenization of an accounting or financial document.

There is currently no system able of tracking a financial investment by a user or investor in every investment process. It is known that an investor buys shares or shareholdings on a budget, however there is no computer implemented system able to connect an economic plan to the user's investment.

The purpose of the present invention is to provide a system and a method able to track a financial investment, made by a user or investor, in each of his investment processes.

The technical problem that the invention wants to solve is to provide a system and a method able to track, identify and encrypt, in a univocal, permanent and irrefutable way, a portion (exploded into infinitesimal digital parts) of an accounting document, in recognizable metadata, in order to use the extracted data in other management contexts but allocating a unique identity to it. Thus, the system has the scope of creating the possibility of recalling the identifying property not only in other management processes but also to link specific transactions.

According to the present invention, a tracking, identification and encryption system for financial plans and corporate documents is provided according to claim 1.

According to the present invention, a tracking, identification and encryption method for financial plans and corporate documents is provided according to claim 7.

For a better understanding of the present invention, a preferred embodiment is now described, purely by way of nonlimiting example, with reference to the attached drawing, in which:

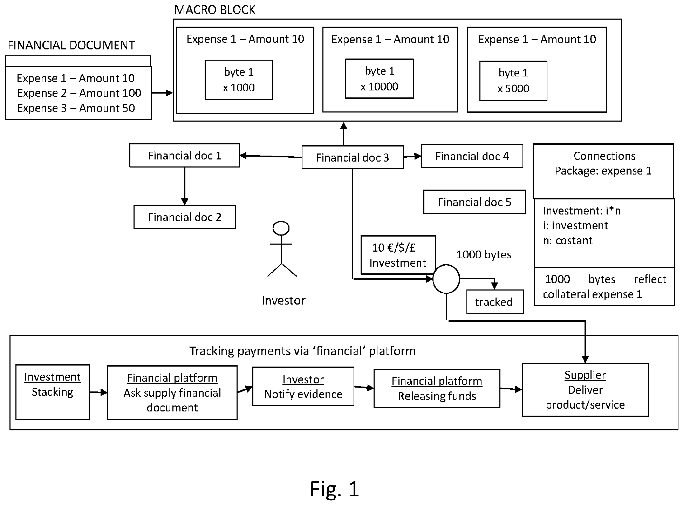

- figure 1 shows a block diagram of a tracking, identification and encryption system, according to the invention.

With reference to this figure, a tracking, identification and encryption system is shown, according to the invention.

The tracking, identification and encryption system for financial plans and corporate documents according to the invention comprises:
- a computer platform for computers equipped with an artificial intelligence system;
- at least one financial document containing financial data relating to at least one expense;
- at least one macro block in which the data relating to each expense specified in each at least one financial document is stored and divided into sub-blocks;
- at least one investment quota, processed by the system on the basis of the data stored and processed by the macro block.

Said computer platform is configured to transform a plurality of accounting documents into metadata, such metadata being stored in chains of blocks, where an encrypting algorithm concatenates the next block, protected by encryption and represented by bytes.

Said system according to the invention is configured to export by means of a specific API said at least one financial document uniquely identified, to at least a second computer platform.

According to an aspect of the invention, the system is configured to trace a financial investment by a user or investor in each of his investment processes and to link the economic plan to the user's investment.

According to an aspect of the invention, the system consists of a proprietary algorithm, and includes artificial intelligence methods and systems.

According to an aspect of the invention, the system, before creating a block, is configured to divide each item of accounting expenditure into thousandth parts, in which each byte is represented by number 1 as a coefficient to be compared to legal tender currencies.

According to an aspect of the invention, for each acquired package, a customer / investor physically acquires a computer property expressed in bytes enclosed in blocks.

According to an aspect of the invention, the system is configured to explode a financial document, reducing in thousandths its value and associating it with the product for which the expense item was created, so as to create an automatic, non-modifiable and unique system to link an invested amount to a collateral in the real world.

The present invention, is also related to a computer implemented method, comprising:
- a step of tracing payments by means of a financial platform;
- A step of investment stacking;
- A step of requesting the supply at least one financial document by the platform;
- a step of tracking, identifying and encrypting said at least one financial document;
- A step of notification of the evidence to the investor;
- A step of release of funds by the platform;
- A step of delivery of products / services by a supplier.

Advantageously according to the invention, the system and method are configured to track, identify and encrypt, in a univocal, permanent and irrefutable way, a portion of an accounting or financial document (exploded into infinitesimal digital parts or sub-blocks) in recognizable metadata, in order to be able to use the extracted data in other management contexts but allocating a unique identity to it.

Advantageously according to the invention, the system and method are configured to create the possibility of recalling this identifying property not only in other management processes, or other computer platforms, but also to link specific transactions. Through this "mechanism" of univocal identification of the document and digital explosion of the same, the system allow to reconstruct a file that represent the original, non-modifiable financial document. All activities related and connected to this file, through internal processes or through third parties with APIs, can interact together using the identification system as a unique and immutable collector.

It is finally clear that the tracking, identification and encryption system for financial plans and corporate documents and related method, here described and illustrated, may be subject to modifications and variations without thereby departing from the scope of the present invention, as defined in the appended claims.

## Claims

1. Tracking, identification and encryption system for financial plans and corporate documents **characterized in** comprising:
- a computer platform for computers equipped with an artificial intelligence system;
- at least one financial document containing financial data relating to at least one expense;
- at least one macro block in which the data relating to each expense specified in each at least one financial document is stored and divided into sub-blocks;
- at least one investment quota, processed by the system on the basis of the data stored and processed by the macro block;
Wherein said computer platform is configured to transform a plurality of accounting documents into metadata, such metadata being stored in chains of blocks, where an encrypting algorithm concatenates the next block, protected by encryption and represented by bytes, and
said system is configured to export by means of a specific API said at least one financial document uniquely identified, to at least a second computer platform.

2. System according to claim 1, **characterized in that** said system is configured to trace a financial investment by a user or investor in each of his investment processes and to link the economic plan to the user's investment.

3. System according to claim 1, **characterized in that** the system consists of a proprietary algorithm, and includes artificial intelligence methods and systems.

4. System according to claim 1, **characterized in that** said system, before creating a block, is configured to divide each item of accounting expenditure into thousandth parts, in which each byte is represented by number 1 as a coefficient to be compared to legal tender currencies.

5. System according to claim 1, **characterized in that** for each acquired package, a customer / investor physically acquires a computer property expressed in bytes enclosed in blocks.

6. System according to claim 1, **characterized in** being configured to explode a financial document, reducing in thousandths its value and associating it with the product for which the expense item was created, so as to create an automatic, non-modifiable and unique system to link an invested amount to a collateral in the real world.

7. Computer implemented method, **characterized in** comprising:
- a step of tracing payments by means of a financial platform;
- A step of investment stacking;
- A step of requesting the supply at least one financial document by the platform;
- a step of tracking, identifying and encrypting said at least one financial document;
- A step of notification of the evidence to the investor;
- A step of release of funds by the platform;
- A step of delivery of products / services by a supplier.
